# EUROPÄISCHE PATENTANMELDUNG

(11) **EP 3 581 830 A1**
(43) Veröffentlichungstag der Anmeldung: **18.12.2019**
(21) Anmeldenummer: 19177913.1
(22) Anmeldetag: 03.06.2019
(51) Int. Cl.: F16H 57/08, F16H 1/28

(54) **GETRIEBEANORDNUNG**

(30) Priorität: 13.06.2018 DE 102018209447
(71) Anmelder: Aktiebolaget SKF, 41 550 Göteborg (SE)
(72) Erfinder: Schulz, Ingo, 97447 Gerolzhofen (DE)
(74) Vertreter: Kohl, Thomas

(57) **Zusammenfassung**

Offenbart wird eine Getriebeanordnung (1) mit einem Sonnenrad (2) mit einer Außenverzahnung (34), einem Planetenträger (4), wobei der Planetenträger (4) um das Sonnenrad (2) angeordnet ist, einem Hohlrad (6) mit einer Innenverzahnung (38), welches den Planetenträger (4) und das Sonnenrad (2) umgibt, und zumindest einem Doppelplaneten (8), wobei der zumindest eine Doppelplanet (8) an dem Planetenträger (4) befestigt ist, wobei der Doppelplanet (8) eine erste Verzahnung (32) und eine zweite Verzahnung (36) aufweist, dass die Außenverzahnung (34) des Sonnenrads (2) mit der ersten Verzahnung (32) kämmt und dass die zweite Verzahnung (36) mit der Innenverzahnung (38) des Hohlrads (6) kämmt.

## Beschreibung

Vorliegende Erfindung betrifft eine Getriebeanordnung mit einem Sonnenrad, einem Planetenträger, einem Hohlrad und zumindest einem Doppelplaneten gemäß dem Oberbegriff von Patentanspruch 1.

In der Robotik oder anderen Maschinen wird zur Übertragung einer Antriebskraft von einer Antriebswelle auf eine Abtriebswelle häufig ein Planetengetriebe mit einem Sonnenrad, einem Hohlrad und einem Planetenträger verwendet. Zur Übertragung der Rotation zwischen den Elementen können Zahnräder und/oder Doppelplaneten verwendet werden. In bisher verwendeten Planetengetrieben sind zur Kraftübertragung zwischen einem Sonnenrad und einem Planetenträger bzw. einem Planetenträger und einem Hohlrad mehrere Zahnräder oder mehrere Doppelplaneten oder eine Kombination aus diesen erforderlich.

Bei den bisher verwendeten Planetengetrieben, bei denen zur Kraft- bzw. Rotationsübertragung zwischen dem Sonnenrad und dem Planetenträger und dem Planetenträger und dem Steg mehrere Zahnräder oder Doppelplaneten vorgesehen sind, handelt es sich um Plusgetriebe. Unter einem Plusgetriebe wird ein Getriebe verstanden, bei welchem, wenn es als Standgetriebe implementiert ist, die Drehrichtung des Antriebs und des Abtriebs identisch ist. Das bedeutet, dass, wenn der Planetenträger (zumindest gedanklich) nicht rotiert, die Drehrichtung des Sonnenrads und des Hohlrads identisch sind. Bei einem hohen Übersetzungsverhältnis (z.B. i>29) kann dies zu einer Selbsthemmung des Getriebes in einer Richtung führen, wenn sich der Abtrieb in den Antrieb ändert (z.B. wenn ein Motor nun als Generator wirkt).

Es ist deshalb Aufgabe vorliegender Erfindung, eine Getriebeanordnung bereitzustellen, in der die Anzahl der erforderlichen Zahnräder und/oder Doppelplaneten reduziert werden kann und bei der eine Selbsthemmung vermieden werden kann.

Diese Aufgabe wird durch eine Getriebeanordnung gemäß Patentanspruch 1 gelöst. Die Getriebeanordnung weist ein Sonnenrad mit einer Außenverzahnung, einen Planetenträger, und ein Hohlrad mit einer Innenverzahnung auf, wobei der Planetenträger um das Sonnenrad angeordnet ist und das Hohlrad den Planetenträger und das Sonnenrad umgibt. Die Getriebeanordnung weist des Weiteren zumindest einen Doppelplaneten auf, wobei der zumindest eine Doppelplanet an dem Planetenträger befestigt ist.

Um nun im Vergleich zu bestehenden Getriebeanordnungen die Anzahl der zur Kraftübertragung erforderlichen Zahnräder und/oder Doppelplaneten zu reduzieren, ist es in der vorgeschlagenen Getriebeanordnung vorgesehen, dass der Doppelplanet eine erste Verzahnung und eine zweite Verzahnung aufweist, wobei die Außenverzahnung des Sonnenrads mit der ersten Verzahnung kämmt und wobei die zweite Verzahnung mit der Innenverzahnung des Hohlrads kämmt.

Auf diese Weise kann durch einen einzigen Doppelplaneten eine Kraftübertragung von dem Sonnenrad auf den Planetenträger (bzw. den Doppelplaneten, der an dem Planetenträger befestigt ist) und von dem Planetenträger auf das Hohlrad erfolgen. Weitere, dazwischen angeordnete Zahnräder oder Doppelplaneten sind nicht erforderlich.

Durch die direkte Kopplung zwischen Sonnenrad und Planetenträger sowie Planetenträger und Hohlrad ist die Getriebeanordnung als ein Minusgetriebe implementiert. Das bedeutet, dass bei gedanklich stillstehendem Planetenträger das Sonnenrad und das Hohlrad gegensätzliche Drehrichtungen aufweisen. Die Standübersetzung ist daher negativ. Eine wie oben beschriebene Selbsthemmung kann daher vermieden werden.

Das Hohlrad kann als Gehäuse dienen und feststehend sein. Bevorzugt ist es einteilig. Ein Biegekraftfluss kann dabei über das Gehäuse, das heißt über das Hohlrad, erfolgen, statt über den Planetenträger, wie es in anderen Getriebeanordnungen mit feststehendem Planetenträger oder feststehendem Sonnenrad der Fall ist. Da das Gehäuse eine höhere Steifigkeit als der Planetenträger bereitstellt, wird dadurch die gesamte Getriebeanordnung stabiler.

Das Sonnenrad kann mit einer Antriebs- oder Eingangswelle verbunden sein und als Antrieb wirken. In diesem Fall wirkt der Planetenträger als Abtrieb und ist daher mit einer Ausgangswelle verbunden.

Alternativ kann der Planetenträger mit einer Antriebs- oder Eingangswelle verbunden sein und als Antrieb wirken. In diesem Fall wirkt das Sonnenrad als Abtrieb und ist daher mit einer Ausgangswelle verbunden. Diese Ausführungsform kann bevorzugt im Bereich der Parallelarmroboter, auch Delta-Roboter genannt, verwendet werden. Ein Delta-Roboter basiert auf einer Kinematik, bei der eine Plattform von drei bis sechs parallel angeordnete Linearachsen oder Gelenkarmen geführt wird, die in einer festen Basis gelagert sind. Die Plattform kann mit Werkzeugen, wie beispielsweise einem Greifelement, versehen werden. Üblicherweise verfügt eine solche Kinematik über drei bis vier Gelenkachsen mit stationären Antrieben, z.B. Motoren. Diese Antriebe können mit der hierin beschriebenen Getriebeanordnung verwendet werden. Die dreidimensionale Bewegung der Plattform in YXZ-Richtung erfolgt über die koordinierte Ansteuerung aller Motoren, wobei sich die Plattform auch kippen lässt.

Der Planetenträger kann alternativ feststehend und der Abtrieb/Antrieb über das Sonnenrad und das Hohlrad erfolgen. Beispielsweise kann diese Ausführungsform für den Antrieb von Fahrzeugen verwendet werden. Bevorzugt wird dabei der Planetenträger fest mit dem Fahrzeug verbunden und das Sonnenrad durch einen Motor angetrieben. Das Hohlrad dient in diesem Fall als Abtrieb auf eine Felge bzw. Rad.

Gemäß einer Ausführungsform ist die Anzahl der Zähne der ersten Verzahnung verschieden zu der Anzahl der Zähne der zweiten Verzahnung. Hierbei kann die Anzahl der Zähne der ersten Verzahnung größer als die Anzahl der Zähne der zweiten Verzahnung sein oder die Anzahl der Zähne der ersten Verzahnung kann kleiner als die Anzahl der Zähne der zweiten Verzahnung sein. Durch die unterschiedliche Anzahl der Zähne kann eine Übersetzung der Drehgeschwindigkeit des Antriebs zu der Drehgeschwindigkeit des Abtriebs erfolgen.

Zur Stabilisierung der einzelnen Elemente können Lager verwendet werden, die beispielsweise den Planetenträger lagern. Die Getriebeanordnung kann daher zumindest eine erste Lageranordnung aufweisen, die das Sonnenrad gegenüber dem Planetenträger lagert. Des Weiteren kann die Getriebeanordnung zumindest eine zweite Lageranordnung aufweisen, die den Planetenträger gegenüber dem Hohlrad lagert.

Die erste und die zweite Lageranordnung können Kegelrollenlager, Kugellager und/oder Gleitlager sein.

In manchen bekannten Getriebeanordnungen sind die Lageranordnungen lediglich einer niedrigen Drehgeschwindigkeit ausgesetzt, beispielsweise wenn sie nur mit einem langsam drehenden Abtrieb verbunden sind. Dies kann zu unzureichenden Schmierbedingungen führen, da diese Lageranordnungen keine vollständigen Umdrehungen ausführen oder zu langsam rotieren und daher das Schmiermittel nicht ausreichend in den Lageranordnungen verteilt wird. Dies kann wiederum zu Schäden an den Lageranordnungen und damit zu einem frühen Ausfall der Lageranordnungen führen.

Wird der Planetenträger als Antrieb verwendet, können die Lageranordnungen mit der Drehung des Planetenträgers gedreht werden, da alle Lageranordnungen jeweils mit dem Planetenträger verbunden sind. Auf diese Weise können alle Lageranordnungen, insbesondere die Lageranordnungen, die mit dem Hohlrad verbunden sind, mit einer hohen Drehgeschwindigkeit und einer hohen Umdrehungszahl, nämlich der Drehgeschwindigkeit des antreibenden Planetenträgers, rotiert werden. Des Weiteren werden die Lageranordnungen durch den Planetenträger um 360° und mehr rotiert. Das Schmiermittel kann daher gut in den Lageranordnungen verteilt werden, was die oben genannten Nachteile verhindert.

Die Lageranordnungen können des Weiteren mit einer Überwachungseinheit zum Überwachen des Zustands der Lager, beispielsweise des Schmiermittels, ausgestattet sein. Da bevorzugt der Planetenträger mit dem Antrieb verbunden ist, kann eine hohe Drehgeschwindigkeit (mehr als fünf Umdrehungen pro Sekunde) sowie vollständige Umdrehungen der Lageranordnungen gewährleistet werden. Die Überwachungseinheit kann einen Sensor aufweisen, der sich an einer festen Position des Lagerinnen- oder Lageraußenrings befindet. Ist die Drehgeschwindigkeit zu langsam, wird durch den Sensor ein verrauschtes Signal erzeugt, da durch die Bewegung keine ausreichende Signalamplitude erzeugt wird. Bei den hier vorliegenden Drehgeschwindigkeiten reichen die erzeugten Signale jedoch aus, um einen Zustand der Lageranordnungen zu ermitteln.

Gemäß einer weiteren Ausführungsform kann die Getriebeanordnung zumindest einen weiteren Doppelplaneten aufweisen, welcher eine erste Verzahnung und eine zweite Verzahnung aufweist. Der zumindest eine weitere Doppelplanet ist an dem Planetenträger befestigt, wobei die Außenverzahnung des Sonnenrads mit der ersten Verzahnung kämmt und wobei die zweite Verzahnung mit der Innenverzahnung des Hohlrads kämmt.

Durch die Verwendung von zwei oder mehr Doppelplaneten, die bevorzugt diametral angeordnet sind, kann die Anordnung des Sonnenrads, des Planetenträgers und des Hohlrads zueinander stabilisiert werden. Durch den zweiten Doppelplaneten kann daher ein radiales Spiel zwischen dem Hohlrad, dem Planetenträger und dem Sonnenrad verhindert werden.

In einer weiteren Ausführungsform kann die Getriebeanordnung zumindest einen dritten Doppelplaneten, und besonders bevorzugt zumindest einen vierten Doppelplaneten, aufweisen. Diese Doppelplaneten weisen jeweils eine erste Verzahnung und eine zweite Verzahnung auf und sind jeweils an dem Planetenträger befestigt, wobei die Außenverzahnung des Sonnenrads mit der ersten Verzahnung kämmt und wobei die zweite Verzahnung mit der Innenverzahnung des Hohlrads kämmt. Bei der Verwendung von vier Doppelplaneten, die umfänglich vorzugsweise gleich verteilt sind, kann die Kraft, die auf den Planetenträger, das Sonnenrad und das Hohlrad wirkt, besonders gut in der Getriebeanordnung verteilt werden.

Um ein Spiel zwischen der Verzahnung n des ersten Doppelplaneten sowie dem Sonnenrad bzw. dem Hohlrad zu minimieren, kann weiterhin die erste Verzahnung des ersten Doppelplaneten im Uhrzeigersinn derart vorgespannt sein, dass die erste Verzahnung des ersten Doppelplaneten in Kontakt mit der Verzahnung des Sonnenrads ist. Alternativ oder zusätzlich kann auch die zweite Verzahnung des ersten Doppelplaneten gegen den Uhrzeigersinn derart vorgespannt werden, dass die zweite Verzahnung des ersten Doppelplaneten in Kontakt mit der Verzahnung des Hohlrads ist. Auf diese Weise können die Verzahnungen des ersten Doppelplaneten in zwei verschiedene Richtungen, einmal im Uhrzeigersinn, einmal gegen den Uhrzeigersinn gegen das Sonnenrad und das Hohlrad (tangential) vorgespannt werden. Durch diese Vorspannung kann ein Kontakt zwischen den Verzahnungen des Sonnenrads bzw. des Hohlrads und den Verzahnungen des Doppelplaneten erzeugt werden. Dieser Kontakt kann des Weiteren durch die Vorspannung in unterschiedliche Richtungen auch im Betrieb aufrechterhalten werden und dadurch ein Spiel zwischen den Verzahnungen vermieden werden.

Wird, wie oben beschrieben, ein zweiter Doppelplanet verwendet, kann zudem die erste Verzahnung des zweiten Doppelplaneten gegen den Uhrzeigersinn derart vorgespannt sein, dass die erste Verzahnung des zweiten Doppelplaneten in Kontakt mit der Verzahnung des Sonnenrads ist. Zusätzlich kann die zweite Verzahnung des zweiten Doppelplaneten im Uhrzeigersinn derart vorgespannt sein, dass die zweite Verzahnung des zweiten Doppelplaneten in Kontakt mit der Verzahnung des Hohlrads ist. Dadurch wird das Spiel in dem Planetengetriebe auch für den zweiten Doppelplaneten reduziert.

Das Spiel zwischen dem Sonnenrad bzw. dem Hohlrad und den Doppelplaneten kann also durch die Verwendung von vorgespannten Doppelplaneten verhindert werden. Durch die Vorspannung des zweiten Doppelplaneten, die entgegengesetzt zu der Vorspannung des ersten Doppelplaneten sein kann, kann ein Spiel zwischen den Verzahnungen noch besser verhindert werden. Zusätzlich kann durch die gleichmäßige Kraftverteilung aufgrund der zwei Doppelplaneten das radiale Spiel zwischen dem Sonnenrad, dem Planetenträger und dem Hohlrad reduziert werden. Insbesondere kann hierbei die Vorspannkraft für alle Zahnräder gleich sein.

Wird eine solche Getriebeanordnung, bei der das Spiel zwischen dem Sonnenrad bzw. dem Hohlrad und den Doppelplaneten durch die Verwendung von vorgespannten Doppelplaneten verhindert wird, in einem Fahrzeug verwendet, kann ein sehr genauer Antrieb realisiert werden, was insbesondere bei fahrerlosen Fahrzeugen oder auch schienengebundenen Fahrsystemen eine hohe Positionsgenauigkeit des gesamten Fahrzeugs ermöglicht.

Der Planetenträger kann eine rotationssymmetrische Form aufweisen. Beispielsweise kann er als Ring ausgebildet sein. Alternativ kann der Planetenträger auch mehrere Stege oder diskrete Arme aufweisen.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
- Fig. 1:: eine Getriebeanordnung mit einem Sonnenrad, einem Planetenträger und einem Hohlrad;
- Fig. 2:: einen Parallelarmroboter mit der Getriebeanordnung von Fig. 1; und
- Fig. 3:: einen Kraftfahrzeugantrieb mit der Getriebeanordnung von Fig. 1.

Im Folgenden werden gleiche oder funktionell gleichwirkende Elemente mit denselben Bezugszeichen gekennzeichnet.

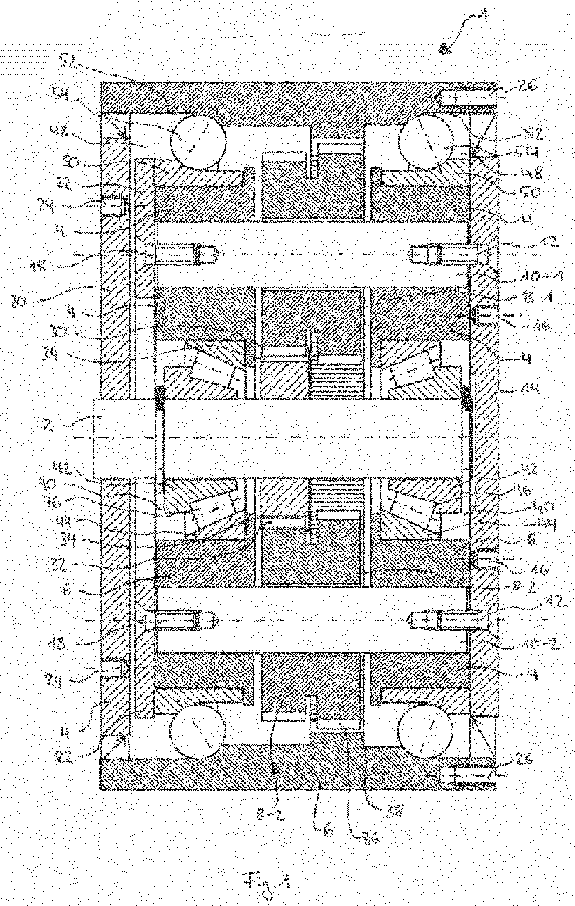

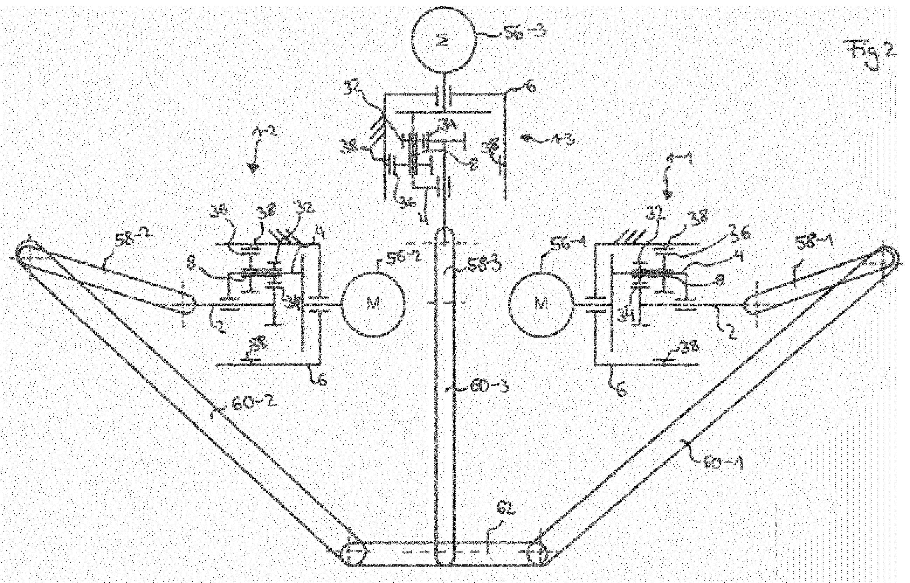

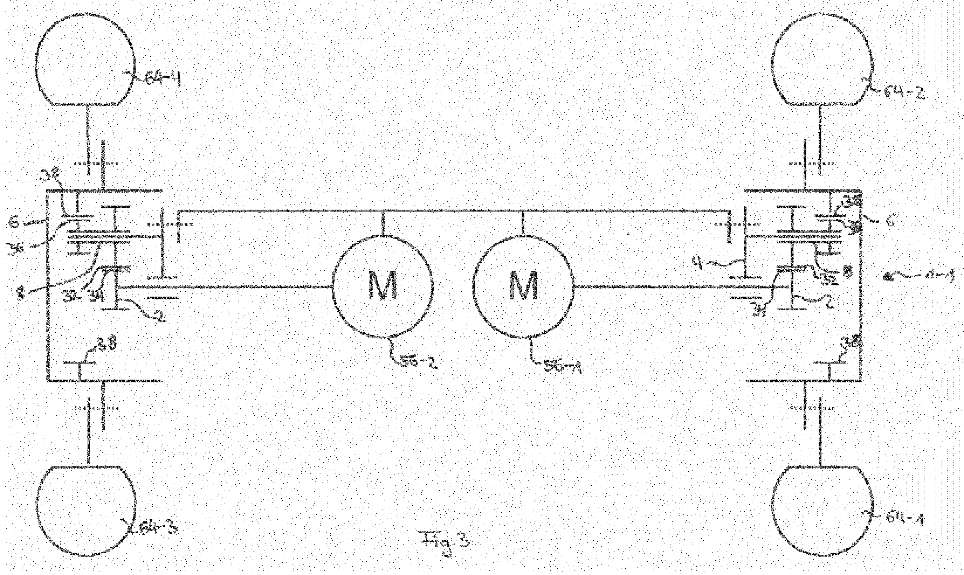

Fig. 1 zeigt eine Getriebeanordnung 1 mit einem Sonnenrad 2, einem Planetenträger 4 und einem Hohlrad 6. Eine solche Getriebeanordnung 1 kann als Gelenk in einer Robotereinheit, wie beispielsweise einem Parallelarmroboter (siehe Fig. 2), oder als Verbindung zwischen einem Motor und einem Rad in einem Kraftfahrzeug (siehe Fig. 3) eingesetzt werden.

Je nach Anwendungsfall kann das Sonnenrad 2, der Planetenträger 4 oder das Hohlrad 6 feststehen. In dem in Fig. 1 dargestellten Fall ist das Hohlrad 6 feststehend.

Eine Seite der Getriebeanordnung 1 stellt eine Abtriebsseite und die gegenüberliegende Seite eine Antriebsseite dar. Die Antriebsseite kann mit einem Motor verbunden werden. Über einen solchen Motor kann in der gezeigten Ausführungsform wahlweise das Sonnenrad 2 oder der Planetenträger 4 angetrieben werden.

Wird das Sonnenrad 2 angetrieben, wird eine Drehung des Sonnenrads 2 über Planeten 8, die an dem Planetenträger 4 angeordnet sind, auf den Planetenträger 4 übertragen und die Planeten 8 rollen auf dem Hohlrad 6 ab. Wird dagegen der Planetenträger 4 angetrieben, wird eine Drehung des Planetenträgers 4 über die Planeten 8 auf das Sonnenrad 2 übertragen, wobei die Planeten 8 ebenfalls auf dem Hohlrad 6 abrollen.

Im Folgenden wird die Getriebeanordnung mit Bezugnahme auf Fig. 1 im Detail beschrieben.

Um das Sonnenrad 2 ist der Planetenträger 4 angeordnet. Dieser kann eine Ringform aufweisen und mit mehreren Naben 10-1, 10-2 ausgestattet sein, die umfänglich um das Sonnenrad 2 angeordnet sind. Die Naben 10-1, 10-2 können mittels Befestigungsmitteln 12 an einer Abdeckung 14 befestigt sein. Die Abdeckung 14 kann wiederum über eine Befestigung 16 mit einem Antriebs- oder einem Abtriebselement verbunden sein.

Auf der axial gegenüberliegenden Seite ist der Planetenträger 4 mittels Befestigungsmitteln 18 ebenfalls mit einer Abdeckung 20 verbunden. Zusätzlich ist die Getriebeanordnung 1 insgesamt ebenfalls mit einer Abdeckung 22 versehen, die über eine Befestigung 24 mit einem Antriebs- oder Abtriebselement verbunden sein kann.

Das Hohlrad 6 kann über eine Befestigung 26 mit einem Gehäuse verbunden werden oder kann selbst als Gehäuse ausgestaltet sein.

Um eine Bewegung des Planetenträgers 4 auf das Sonnenrad 2 zu übertragen, sind an dem Planetenträger Doppelplaneten 8-1, 8-2 vorgesehen. Diese weisen jeweils eine erste Verzahnung 32 auf, die mit einer Außenverzahnung 34 des Sonnenrads 2 kämmt. Die Doppelplaneten 8-1, 8-2 weisen des Weiteren eine zweite Verzahnung 36 auf, die mit einer Innenverzahnung 38 des Hohlrads 6 kämmt. Durch die ersten Verzahnungen 32 wird die Drehung des Planetenträgers 4 auf das Sonnenrad 2 übertragen bzw. übersetzt. Durch die zweiten Verzahnungen 36 rollen die Doppelplaneten 8-1, 8-2 auf dem Hohlrad 6 ab.

Die Doppelplaneten 8-1, 8-2 sind also an dem Planetenträger 4 befestigt und kämmen direkt mit dem Sonnenrad 2 und dem Hohlrad 6. Es sind keine weiteren zusätzlichen Bauteile, wie beispielsweise Zahnräder oder Planeten, zwischen dem Sonnenrad 2 und dem Planetenträger 4 und dem Planetenträger 4 und dem Hohlrad 6 vorgesehen. Durch diese Anordnung der Getriebeanordnung 1 haben das Sonnenrad 2 und das Hohlrad 6 gegensätzliche Drehrichtungen, wenn der Planetenträger 4 gedanklich festgehalten wird, und die Standübersetzung zwischen ihnen ist negativ. Die Getriebeanordnung 1 ist somit ein Minusgetriebe.

Die Getriebeanordnung 1 kann zur Abstützung des Sonnenrads 2 und des Planetenträgers 4 zwischen dem Sonnenrad 2 und dem Planetenträger 4 sowie zwischen dem Planetenträger 4 und dem Hohlrad 6 Lageranordnungen 40, 48 aufweisen.

In der gezeigten Ausführungsform sind zwischen dem Sonnenrad 2 und dem Planetenträger 4 zwei Lageranordnungen 40 angeordnet. Diese weisen jeweils einen Innenring 42, der mit dem Sonnenrad 2 verbunden ist, und einen Außenring 44 auf, der mit dem Planetenträger 6 verbunden ist. Zwischen dem Innenring 42 und dem Außenring 44 sind Wälzkörper 46, in diesem Fall Kegelrollen, angeordnet. Es können auch andere Arten von Wälzkörpern verwendet werden. Alternativ kann es sich bei der Lageranordnung 40 auch um ein Gleitlager handeln.

Des Weiteren sind in der gezeigten Ausführungsform zwischen dem Planetenträger 4 und dem Hohlrad 6 zwei Lageranordnungen 48 angeordnet. Die Lageranordnungen 48 weisen jeweils einen Innenring 50, der mit dem Planetenträger 4 verbunden ist, und einen Außenring 52 auf. Der Außenring 52 kann entweder mit dem Hohlrad 6 verbunden sein oder kann, wie hier gezeigt, durch das Hohlrad 6 gebildet werden. Zwischen dem Innenring 50 und dem Außenring 52 sind Wälzkörper 54, in diesem Fall Kugeln, angeordnet. Es können auch andere Arten von Wälzkörpern verwendet werden. Alternativ kann es sich bei der Lageranordnung 40 auch um ein Gleitlager handeln.

Die in Fig. 1 beschriebene Getriebeanordnung kann beispielsweise in einem Parallelarmroboter, auch Delta-Roboter genannt, verwendet werden, wie es in Fig. 2 gezeigt ist. Bei einem solchen Roboter wird eine Plattform 62 über Arme 58, 60 aufgehängt. An der Plattform 62 können Werkzeuge, wie beispielsweise ein Greifelement, befestigt werden. Die Plattform 62 ist dabei über ein Gelenk, beispielsweise Kugelgelenk, mit mehreren Armabschnitten 60-1, 60-2 verbunden, die wiederum über Gelenke, beispielsweise Kugelgelenke, mit Armabschnitten 58-1, 58-2, 58-3 verbunden sind. Die Armabschnitte 58-1, 58-2, 58-3 werden über drei Getriebeanordnungen 1-1. 1-2, 1-2 bewegt. Da die Armabschnitte 58 schräg in Bezug auf die jeweilige Getriebeanordnung 1 angeordnet sind, führt eine Drehung durch die Getriebeanordnung 1 zu einer kegelförmigen Bewegung des jeweiligen Armabschnitts 58. Durch diese Drehungen kann die Bewegung der Plattform 62 gesteuert werden.

Die drei Getriebeanordnungen 1-1. 1-2, 1-2 werden jeweils von einem Motor 56-1, 56-2, 56-3 angetrieben. Da die Getriebeanordnungen 1-1, 1-2, 1-3 analog aufgebaut sind, wird im Folgenden nur eine Getriebeanordnung 1 beschrieben. Der Motor 56 treibt den jeweiligen Planetenträger 4 an, der seine Drehung über den Planeten 8 auf das Sonnenrad 2 übersetzt. Das Hohlrad 6 ist feststehend. Das Sonnenrad 2 ist mit dem Roboterarmabschnitt 58 gekoppelt und bewegt diesen. Da der Armabschnitt 58 schräg in Bezug auf die Getriebeanordnung 1 angeordnet ist, wird die Drehung des Sonnenrads 2 in eine kegelförmige Bewegung des Armabschnitts 58 umgesetzt.

In einer anderen Ausführungsform kann die Getriebeanordnung 1 in einem Kraftfahrzeug, insbesondere einem Elektrofahrzeug, angewendet werden, wie es in Fig. 3 gezeigt ist.

In diesem Fall werden über zwei Motoren 56-1, 56-2 jeweils zwei Räder 64-1, 64-2 und 64-3, 64-4 angetrieben. Hierzu ist zwischen einem Motor 56-1 und zwei Rädern 64-1, 64-2 eine Getriebeanordnung 1-1 angeordnet und zwischen dem weiteren Motor 56-2 und zwei Rädern 64-3, 64-4 eine weitere Getriebeanordnung 1-2 angeordnet. Im Gegensatz zu Fig. 2 ist in diesem Fall der Planetenträger 4 fest mit dem Fahrzeug verbunden und das Sonnenrad 2 wird über den Motor 56 angetrieben. Das Hohlrad 6 treibt die Räder 64 an.

Zusammenfassend wird in der hierin vorgeschlagenen Getriebeanordnung durch einen einzigen bzw. umfängliche verteilte Doppelplaneten eine Kraftübertragung von dem Sonnenrad auf den Planetenträger und von dem Planetenträger auf das Hohlrad realisiert. Auf diese Weise können weitere, dazwischen angeordnete Zahnräder oder Doppelplaneten vermieden werden, wodurch die Gesamtanzahl an Bauteilen reduziert werden kann. Des Weiteren kann durch die direkte Kopplung zwischen Sonnenrad und Planetenträger das Getriebe als Minusgetriebe implementiert werden. Eine Selbsthemmung, wie sie bei Plusgetrieben auftreten kann, kann daher vermieden werden, da die Getriebeanordnung sowohl rückwärts als auch vorwärts betrieben werden kann.

### Bezugszeichenliste

- 1: Getriebeanordnung
- 2: Sonnenrad
- 4: Planetenträger
- 6: Hohlrad
- 8: Doppelplaneten
- 10: Nabe
- 12: Befestigungsmittel
- 14: Abdeckung
- 16: Befestigung mit Antrieb
- 18: Befestigungsmittel
- 20: Abdeckung
- 22: Abdeckung
- 24: Befestigung
- 26: Befestigung mit vorherigem Abschnitt
- 32: erste Verzahnung
- 34: Außenverzahnung des Sonnenrads
- 36: zweite Verzahnung
- 38: Innenverzahnung des Hohlrads
- 40: Lageranordnung
- 42: Innenring
- 44: Außenring
- 46: Wälzkörper
- 48: Lageranordnung
- 50: Innenring
- 52: Außenring
- 54: Wälzkörper
- 56: Motor
- 58: Roboterarmabschnitt
- 60: Roboterarmabschnitt
- 62: Plattform
- 64: Rad

## Patentansprüche

1. Getriebeanordnung (1) mit:
einem Sonnenrad (2) mit einer Außenverzahnung (34),
einem Planetenträger (4), wobei der Planetenträger (4) um das Sonnenrad (2) angeordnet ist,
einem Hohlrad (6) mit einer Innenverzahnung (38), welches den Planetenträger (4) und das Sonnenrad (2) umgibt, und
zumindest einem Doppelplaneten (8), wobei der zumindest eine Doppelplanet (8) an dem Planetenträger (4) befestigt ist,
**dadurch gekennzeichnet, dass** der Doppelplanet (8) eine erste Verzahnung (32) und eine zweite Verzahnung (36) aufweist, dass die Außenverzahnung (34) des Sonnenrads (2) mit der ersten Verzahnung (32) kämmt und dass die zweite Verzahnung (36) mit der Innenverzahnung (38) des Hohlrads (6) kämmt.

2. Getriebeanordnung nach Anspruch 1, wobei die Anzahl der Zähne der ersten Verzahnung (32) verschieden zu der Anzahl der Zähne der zweiten Verzahnung (36) ist, wobei die Anzahl der Zähne der ersten Verzahnung (32) größer als die Anzahl der Zähne der zweiten Verzahnung (36) ist oder wobei die Anzahl der Zähne der ersten Verzahnung (32) kleiner als die Anzahl der Zähne der zweiten Verzahnung (36) ist.

3. Getriebeanordnung nach einem der vorhergehenden Ansprüche, mit zumindest einer ersten Lageranordnung (40), die das Sonnenrad (2) gegenüber dem Planetenträger (4) lagert.

4. Getriebeanordnung nach einem der vorhergehenden Ansprüche, mit zumindest einer zweiten Lageranordnung (48), die den Planetenträger (4) gegenüber dem Hohlrad (6) lagert.

5. Getriebeanordnung nach Anspruch 3 oder 4, mit einer Überwachungseinheit, die dazu eingerichtet ist, den Zustand der ersten und/oder der zweiten Lageranordnung (40, 48) zu überwachen.

6. Getriebeanordnung nach einem der vorhergehenden Ansprüche, mit zumindest einem weiteren Doppelplaneten (8), welcher eine erste Verzahnung (32) und eine zweite Verzahnung (36) aufweist,
wobei der zumindest eine weitere Doppelplanet (8) an dem Planetenträger (4) befestigt ist, wobei die Außenverzahnung (34) des Sonnenrads (2) mit der ersten Verzahnung (32) kämmt und wobei die zweite Verzahnung (36) mit der Innenverzahnung (38) des Hohlrads (6) kämmt.

7. Getriebeanordnung nach Anspruch 6, wobei der erste und der zumindest eine weitere Doppelplanet (8) umfänglich gleich verteilt sind.

8. Getriebeanordnung nach einem der vorhergehenden Ansprüche, wobei der Planetenträger (4) eine rotationssymmetrische Form aufweist, wobei vorzugsweise der Planetenträger (4) eine Ringform aufweist oder wobei der Planetenträger (4) Stege aufweist.

9. Roboter, insbesondere Delta-Roboter, mit einer Getriebeanordnung nach einem der vorhergehenden Ansprüche.

10. Motor, insbesondere für ein Kraftfahrzeug, mit einer Getriebeanordnung nach einem der Ansprüche 1 bis 8.
